# NEUE EUROPÄISCHE PATENTSCHRIFT

(11) **EP 1 474 312 B2**
(45) Veröffentlichungstag und Bekanntmachung des Hinweises auf die Entscheidung über den Einspruch: **06.07.2016**
(45) Hinweis auf die Patenterteilung: 08.08.2007
(21) Anmeldenummer: 03734675.6
(22) Anmeldetag: 17.01.2003
(51) Int. Cl.: B60Q 1/56, G09F 13/22

(54) **SCHILD, INSBESONDERE KENNZEICHENSCHILD FUER KRAFTFAHRZEUGE**
SIGN, ESPECIALLY A NUMBER PLATE FOR A MOTOR VEHICLE
PLAQUE, EN PARTICULIER PLAQUE D'IMMATRICULATION POUR VEHICULES

(30) Priorität: 31.01.2002 DE 20201377 U; 06.03.2002 DE 10209691; 12.10.2002 DE 10247708
(43) Veröffentlichungstag der Anmeldung: 10.11.2004
(73) Patentinhaber: Volkswagen Aktiengesellschaft, 38440 Wolfsburg (DE); Fitzke Werbetechnik, 38518 Gifhorn (DE)
(72) Erfinder: FITZKE, Michael, 38165 Lehre (DE); MÜLLER, Michael, 38518 Gifhorn (DE)
(86) Internationale Anmeldenummer: PCT/EP2003/000424
(87) Internationale Veröffentlichungsnummer: WO 2003/064210

(56) Entgegenhaltungen:
- EP-A1- 1 032 853
- WO-A-95/08818
- WO-A1-98/20375
- DE-A- 19 827 477
- DE-A1- 10 112 328
- DE-A1- 19 717 740
- DE-U- 20 022 563
- DE-U1- 29 911 348
- US-A- 4 020 389
- US-A- 5 552 679

## Beschreibung

Die Erfindung betrifft ein Kennzeichen für Kraftfahrzeuge mit einem elektrolumineszierenden Aufbau gemäß dem Oberbegriff des Patentanspruchs 1.

Herkömmliche Kennzeichenschilder für Kraftfahrzeuge werden aus einem Blechrohling hergestellt, der mit einer reflektierenden Schicht versehen ist und geprägt wird, um die entsprechenden Buchstaben- und/oder Nummernkombinationen individuell erstellen zu können. Nach dem Prägen werden die Blechrohlinge einem Heißwalzfärbeverfahren zum Einfärben der geprägten Buchstaben- und/oder Nummernkombinationen unterzogen. Gegebenenfalls wird auf die fertigen Schilder eine transparente Schutzschicht aufgebracht.

Nachteilig ist, dass zur guten Erkennbarkeit der Buchstaben- und Nummernkombinationen in der Dunkelheit eine in unmittelbarer Nähe des Kennzeichenschildes, am Fahrzeug eine Lichtquelle angeordnet werden muss, die das Schild beleuchtet damit die einfallenden Lichtstrahlen reflektiert werden können.

Aus der deutschen Offenlegungsschrift DE 198 27 477 A1 ist ein Kennzeichenschild für ein Kraftfahrzeug bekannt, welches als aktive Beleuchtung eine zumindest im Bereich der: Kennzeichnung angeordnete, elektrisch aktivierbare Leuchtfolienanordnung vorsieht, die die Kennzeichnung und/oder die Schildfläche hinterlegt. Das in dem deutschen Gebrauchsmuster DE 200 22 563 vorgeschlagene Kennzeichenschild entwickelt die Elektrolumineszenz-Folienanordnung weiter. Eine solche Elektrolumineszenz-Folienanordnung lässt jedoch eine Prägung von Symbolen, insbesondere Buchstaben- und/oder Nummernkombinationen nicht zu.

Aus der Druckschrift WO 9508818 ist ein elektrolumineszierendes Werbeschild für Kraftfahrzeuge bekannt. Dieses Werbeschild besteht aus einem elektrisch leitfähigem Material als Grundkörper, auf dem Grundkörper ist eine elektrolumineszierender Pigmentierung aufgebracht, welche mit einer leitfähigen Schicht abgedeckt ist.

Es ist die Aufgabe der Erfindung, ein Kennzeichen für Kraftfahrzeuge mit einem Elektrolumineszenz-Aufbau zu schaffen, dass verformbar bzw. prägefähig ist.

Die Aufgabe wird durch die Merkmale des Patentanspruchs 1 gelöst. Vorteilhafte Aus- und Weiterbildungen sind in den Unteransprüchen gezeigt.

Gemäß der Erfindung besteht der Grundkörper aus einem elektrisch leitfähigen Material, beispielsweise Aluminium, oder weist direkt oder indirekt über eine weitere Schicht eine elektrisch leitfähige Schicht auf. Der elektrisch leitfähige Grundkörper bzw. seine elektrisch leitfähige Beschichtung bilden somit eine erste Elektrode eines Flachkondensators. Auf dem elektrisch leitenden Grundkörper bzw. seiner elektrisch leitfähigen Beschichtung ist eine Schicht mit einer elektrolumineszierenden Pigmentierung aufgebracht. Hierfür eignen sich verschiedene Pigmente; zum Beispiel ZnS, ZnSe, ZnS/CdS, die unter Einwirkung eines elektrischen Wechselspannungsfeldes lumineszieren. Die Lumineszenz tritt dabei nur so lange auf, wie die Erregung durch das Wechselspannungsfeld vorhanden ist. Die elektrolumineszierende Schicht kann durch verschiedene Verfahren, beispielsweise aufspritzen, aufstreichen oder spezielle Siebdruckverfahren aufgebracht werden. Zum Aufbau des elektrischen Feldes ist es erforderlich, dass auf der elektrolumineszierenden Schicht eine transparente, zumindest teiltransparente elektrisch leitfähige Schicht aufgebracht wird, welche die zweite Elektrode des Flachkondensators bildet. Des Weiteren ist eine weitere Schicht vorgesehen; welche lichtreflektierende Mittel aufweist, wobei die die lichtreflektierenden Mittel aufweisende Schicht auf der elektrisch leitfähigen transparenten Schicht zur Bildung der zweiten Elektrode vorgesehen ist, wobei auf der weiteren Schicht eine transparente Schutzschicht vorgesehen wird, wobei auf der Rückseite des elektrisch leitfähigen Grundkörpers eine elektrische Isolationsschicht aufgebracht ist, und wobei anschließend fahrzeugindividuelle Symbole in alle Schichten des Kennzeichenschildes geprägt werden.

Dabei kann die transparente oder teiltransparente lichtreflektierende Schicht eine transparente retroreflektierende Folie sein, die zur elektrolumineszierenden Schicht hin mit einem elektrisch leitfähigen Material zur Bildung der zweiten Elektrode bedampft ist.

Zum Aufbringen von farbigen, insbesondere schwarzen Symbolen, insbesondere Buchstaben- und/oder Nummernkombinationen, ist die reflektierende Schicht oder die Schutzschicht farbig beschichtbar bzw. einfärbbar ausgebildet.

Des Weiteren ist denkbar, dass die lichtreflektierende Mittel aufweisende Schicht direkt auf dem Grundkörper aufgebracht ist. Vorzugsweise ist diese Schicht weiß. Die lichtreflektierende Mittel aufweisende Schicht kann dabei auch eine Folie, insbesondere selbstklebende Folie sein.

Nach einer Weiterbildung des erfindungsgemäßen Kennzeichenschildes weist der elektrisch leitfähige Grundkörper oder die elektrisch leitfähige Schicht des Grundkörpers und die als zweite Elektrode ausgebildete Schicht jeweils eine Kontaktanordnung zur elektrischen Verbindung mit einer Wechselspannungsquelle auf.
Vorzugsweise weist die elektrolumineszierende Pigmentierung metalldatiertes Zinksulfit auf.

Der wesentliche Aspekt der Erfindung besteht darin, dass statt einer elektrolumineszierenden Folie, wie sie aus verschiedenen Veröffentlichungen bekannt ist, auf einem metallischen oder metallisch beschichteten Grundkörper eine elektrolumineszierende Beschichtung aufgebracht wird, die durch einen Prägevorgang, wie er bei der Kennzeichenschild-Herstellung zum Erzeugen der fahrzeugindividuellen Symbole verwendet wird, nicht beschädigt wird und welche ebenfalls prägefähig ist. Ein weiterer Vorteil der Erfindung liegt darin, dass die Schicht auch auf ein bereits geometrisch geprägtes Schild aufgebracht werden kann.

Nachfolgend wird die Erfindung anhand von Ausführungsbeispielen näher erläutert. Die zugehörigen Zeichnungen zeigen:
- Figur 1: einen erfindungsgemäßen Aufbau des Kennzeichenschildes vor einem Prägevorgang der Symbole und
- Figur 2: einen Aufbau des Kennzeichenschildes nach einem Prägevorgang in einem Halterungsrahmen

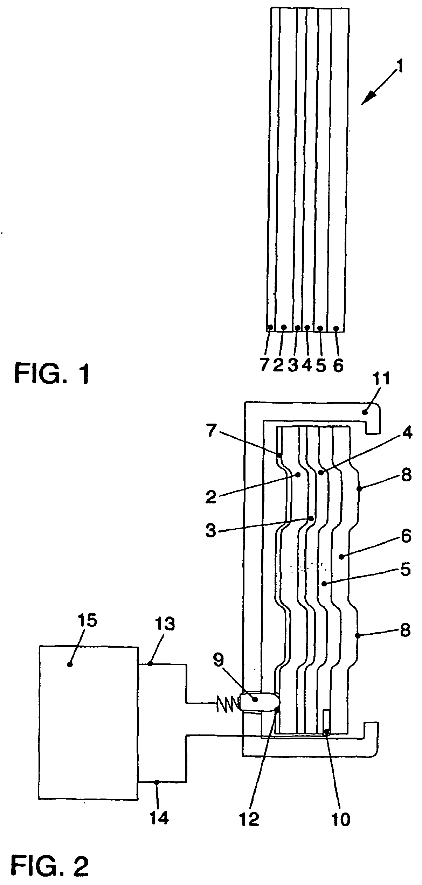

Das erfindungsgemäße Kennzeichenschild 1 gemäß Fig. 1 weist einen Grundkörper 2 aus Aluminium auf, dessen Dicke so gewählt ist, dass auf dem Grundkörper mit Hilfe eines an sich bekannten Prägevorganges erhabene Bereiche 8 erzeugt werden können, und welche die erste Elektrode eines Flachkondensators bildet. Auf dem Grundkörper 2 ist eine elektrolumineszierende Schicht 3, vorzugsweise aus metalldotiertem Zinksulfit, beispielsweise durch ein Siebdruckverfahren aufgebracht. Die transparente zweite Elektrode 4 wird durch eine elektrisch leitende Schicht 4, welche wiederum auf der elektrolumineszierenden Schicht 3 aufgebracht ist, gebildet. Diese Schicht 3 kann eine auf der elektrolumineszierenden Schicht 3 Beschichtung sein oder auch als dünne elektrisch leitende Folie ausgebildet sein. Auf der zweiten Elektrode befindet sich eine transparente reflektierende, beispielsweise retroreflektierende Schicht 5, welche ebenfalls als Beschichtung oder als Folie ausgebildet sein kann. Über der reflektierenden Schicht 5 ist im Ausführungsbeispiel eine Schutzschicht 6 angeordnet, die das Kennzeichenschild vor mechanischen Einwirkungen und vor Witterungseinflüssen schützt. Auch diese Schicht 6 kann als Beschichtung oder als Folie, beispielsweise selbstklebende Folie ausgebildet sein. Zur Isolation der ersten Elektrode 2 ist zusätzlich auf deren Rückseite eine Isolations- und Schutzschicht 7 aufgebracht, welche mit der Schicht 6 identisch sein kann.

In Fig. 2 ist ein bereits geprägtes Kennzeichenschild 1 dargestellt, das einen identischen Schichtaufbau zu Fig. 1 zeigt. Durch den mechanischen Prägevorgang wurden erhabene Bereiche 8 erzeugt, die die fahrzeugindividuellen Symbole, insbesondere Buchstaben- und/oder Nummernkombinationen, bilden. Nach dem Prägevorgang wird das Kennzeichenschild einem Farbwalzvorgang unterzogen, so dass die erhabenen Bereiche eingefärbt und gut sichtbar werden. Am Fahrzeug wird das Kennzeichenschild in einen Halterungsrahmen 11 eingeschoben oder eingesetzt. Die elektrische Kontaktierung der beiden Elektroden 2, 4 kann dabei über freigelegte Bereiche 12 der Elektroden und am Halterahmen 11, beispielsweise federnd gelagerte Kontaktelemente 9, wie sie am Beispiel der ersten Elektrode 2 gezeigt sind, oder über randseitig in den Schichtaufbau eingebaute Kontaktelemente 10 erfolgen. Andere Ausführungsformen sind denkbar. Über die elektrischen Leitungen 13, 14 werden die beiden Elektroden 2, 4 mit der Wechselspannungsquelle 15 verbunden.

## Patentansprüche

1. Verfahren zum Herstellen eines Kennzeichenschildes für Kraftfahrzeuge, wobei ein Grundkörper (2) vorgesehen wird, der zur Bildung einer ersten Elektrode aus einem elektrisch leitfähigem Material besteht oder zur. Bildung der ersten Elektrode eine elektrisch leitfähige Beschichtung aufweist, wobei auf dem Grundkörper (2) oder der elektrisch leitfähigen Beschichtung eine Beschichtung (3) mit elektrolumineszierender Pigmentierung aufgebracht ist, welche wiederum zur Bildung einer zweiten Elektrode mit einer elektrisch leitfähigen Schicht (4) abgedeckt ist, wobei eine weitere Schicht (5) vorgesehen wird, welche lichtreflektierende Mittel aufweist, wobei die die lichtreflektierenden Mittel aufweisende Schicht (5) auf der elektrisch leitfähigen transparenten Schicht (4) zur Bildung der zweiten Elektrode vorgesehen ist, wobei auf der weiteren Schicht (5) eine transparente Schutzschicht (6) vorgesehen wird, wobei auf der Rückseite des elektrisch leitfähigen Grundkörpers (2) eine elektrische Isolationsschicht (7) aufgebracht ist, und wobei anschließend fahrzeugindividuelle Symbole in alle Schichten des Kennzeichenschildes geprägt werden.

2. Verfahren nach Anspruch 1, **dadurch gekennzeichnet, dass** die weitere Schicht (5) elektrisch isolierende Eigenschaften aufweist.

3. Verfahren nach Anspruch 1 oder 2, **dadurch gekennzeichnet, dass** die weitere Schicht (5) eine Folie ist.

4. Verfahren nach Anspruch 1 oder 2, **dadurch gekennzeichnet, dass** die weitere Schicht (5) eine selbstklebende Folie ist.

5. Verfahren nach einem der Ansprüche 1 bis 4, **dadurch gekennzeichnet, dass** die weitere Schicht (5) eine retroreflektierende Schicht ist.

6. Verfahren nach einem der Ansprüche 1 bis 5, **dadurch gekennzeichnet, dass** die transparente Schutzschicht (6) farbig beschichtbar bzw. einfärbbar ausgebildet ist.

7. Verfahren nach einem der Ansprüche 1 bis 6, **dadurch gekennzeichnet, dass** der elektrisch leitfähige Grundkörper (2) oder die direkt oder indirekt über eine weitere Schicht (5) aufgebrachte, elektrisch leitfähige Schicht des Grundkörpers (2) und die die zweite Elektrode bildende Schicht (4) jeweils eine Kontaktanordnung (9, 10) zur elektrischen Verbindung mit einer Wechselspannungsquelle aufweisen.

8. Verfahren nach einem der Ansprüche 1 bis 7, **dadurch gekennzeichnet, dass** die elektrolumineszierende Pigmentierung metalldotiertes Zinksulfit aufweist.

## Claims

1. Method for producing a number plate for motor vehicles, wherein a base body (2) is provided, which consists of an electrically conductive material for forming a first electrode or has an electrically conductive coating for forming the first electrode, wherein a coating (3) with electroluminescent pigmentation is applied to the base body (2) or the electrically conductive coating, which coating (3) in turn is covered with an electrically conductive layer (4) for forming a second electrode, wherein a further layer (5) is provided, having light-reflective means, the layer (5) having the light-reflective means being provided on the electrically conductive transparent layer (4) for forming the second electrode, wherein a transparent protective layer (6) is provided on the further layer (5), wherein an electrical insulating layer (7) is applied on the rear side of the electrically conductive base body (2), and wherein symbols that are individual to the vehicle are subsequently embossed into all layers of the number plate.

2. Method according to Claim 1, **characterized in that** the further layer (5) has electrically insulating properties.

3. Method according to Claim 1 or 2, **characterized in that** the further layer (5) is a film.

4. Method according to Claim 1 or 2, **characterized in that** the further layer (5) is a self-adhesive film.

5. Method according to one of Claims 1 to 4, **characterized in that** the further layer (5) is a retroreflective layer.

6. Method according to one of Claims 1 to 5, **characterized in that** the transparent protective layer (6) can be coated to give it colour or is formed such that it can be coloured.

7. Method according to one of Claims 1 to 6, **characterized in that** the electrically conductive base body (2) or the electrically conductive layer of the base body (2) applied directly or indirectly over a further layer (5) and the layer (4) forming the second electrode respectively have a contact arrangement (9, 10) for the electrical connection to an alternating voltage source.

8. Method according to one of Claims 1 to 7, **characterized in that** the electroluminescent pigmentation includes metal-doped zinc sulfite.

## Revendications

1. Procédé de fabrication d'une plaque d'immatriculation pour véhicules automobiles, un corps de base (2) étant prévu qui se compose d'un matériau conducteur d'électricité servant à constituer une première électrode ou qui présente un revêtement conducteur d'électricité servant à constituer une première électrode, un revêtement (3) avec une pigmentation électroluminescente étant apposé sur le corps de base (2) ou sur le revêtement conducteur d'électricité, lequel revêtement (3) est recouvert d'une couche (4) conductrice d'électricité servant à constituer à son tour une deuxième électrode, dans lequel on a prévu une autre couche (5) qui est dotée d'un moyen réfléchissant la lumière, la couche (5) présentant ce moyen réfléchissant la lumière étant disposée sur la couche (4) transparente conductrice d'électricité servant à constituer la deuxième électrode, une couche (6) transparente de protection étant prévue sur l'autre couche (5), une couche isolante électrique (7) étant appliquée sur le côté arrière du corps de base (2) conducteur d'électricité, et des symboles individuels au véhicule étant ensuite imprimés dans toutes les couches de la plaque d'immatriculation.

2. Procédé selon la revendication 1, **caractérisé en ce que** l'autre couche (5) présente des propriétés d'isolant électrique.

3. Procédé selon la revendication 1 ou 2, **caractérisé en ce que** l'autre couche (5) est un film.

4. Procédé selon la revendication 1 ou 2, **caractérisé en ce que** l'autre couche (5) est un film autoadhésif.

5. Prodédé selon l'une quelconque des revendications 1 à 4, **caractérisé en ce que** l'autre couche (5) est une couche rétroréfléchissante.

6. Procédé selon l'une quelconque des revendications 1 à 5, **caractérisé en ce que** la couche (6) transparente de protection est conçue de manière à pouvoir être revêtue de couleur ou à pouvoir être colorée.

7. Procédé selon l'une quelconque des revendications 1 à 6, **caractérisé en ce que** le corps de base (2) conducteur d'électricité ou la couche conductrice d'électricité du corps de base (2) et apposée directement ou indirectement au-dessus d'une autre couche (5) et la couche (4) constituant la deuxième électrode présentent chacun une configuration des contacts (9, 10) servant à la connexion électrique à une source de tension alternative.

8. Procédé selon l'une quelconque des revendications 1 à 7, **caractérisé en ce que** la pigmentation électroluminescente présente du sulfite de zinc dopé de composants métalliques.
